# EUROPEAN PATENT APPLICATION

(11) **EP 2 871 650 A1**
(43) Date of publication of application: **13.05.2015**
(21) Application number: 12880655.1
(22) Date of filing: 04.07.2012
(51) Int. Cl.: H01G 11/34, H01G 9/004

(54) **DOUBLE LAYER CAPACITOR ELECTRODE**

(71) Applicant: Obschestvo s ogranichennoy otvetstvennostyu 'Tovarischestvo energeticheskikh i electromobilnikh proektov', Moscow 127018 (RU)
(72) Inventor: DASHKO, Oleg Grigoryevich, Korolev Moskovskaya oblast 141077 (RU); DOLGOLAPTEV, Anatoliy Vasilyevich, Pestovo Moskovskaya oblast 140071 (RU); BULDYAYEV, Alexander Fedorovich, Schelkovo Moskovskaya oblast 141100 (RU); SHKOLNIKOV, Eugeniy losifovich, Moscow 115419 (RU); KREPAK, Oleg Veniaminovich, Moscow 109369 (RU); SMIRNOV, Victor Alexeevich, Podolsk Moskovskaya obl. 142117 (RU)
(74) Representative: Hamer, Christopher K.
(86) International application number: PCT/RU2012/000538
(87) International publication number: WO 2014/007670

(57) **Abstract**

What is described is an electrode for an electric double-layer capacitor, said electrode having a substrate of thermally expanded graphite and an activated carbon cloth attach thereto. The electrode features an increased mechanical strength and easy to manufacture.

## Description

### Technical Field

The present invention relates to design of energy-storage electric capacitors which store energy by charge accumulation at the interface between two media, an electrode and electrolyte, and therefore are called "electric double-layer capacitors" (EDLC), "supercapacitors", "hybrid capacitors", "hyper capacitors" (Japan), "ultracapacitors" (Germany, USA), "electrochemical capacitors" (France, Canada), and "ionistors" (Russia and other CIS countries).

Their main advantage of the EDLC over the conventional electrolytic capacitors resides in their increased specific energy. Some types of such capacitors can accumulate a specific energy exceeding 10 kJ/kg and discharge it into a load with a specific power of the order of 1-10kW/kg(www.kit-e.ru/articles/condenser/2005_6_12.php).

To this must be added a great possible number of "charge-discharge" cycles, reliability and durability as well as a wide operating temperature range.
This unique combination of characteristics of the EDLC to a large extent predetermines the possibility and practicability of their use, first of all, in the electric transport and hybrid applications. Another promising field is the use of the EDLC as "the compensators" in power plants showing unstable characteristics, such as wind-driven electric generating systems, electric power stations with solar batteries, tidal power stations.

### Background Art

The EDLC vary in the types of electrode material and electrolyte used. The electrode material may be one of the following three types: activated carbon based materials, metal oxides and electrically conductive polymers. The electrolyte may be water based or organic.

The most commonly used type of EDLC are capacitors with activated carbon based electrodes.

It is well known that the activated (high-porous) carbon materials allow reaching a capacitance density of the order of 10 F/cm³ and higher (http://www.electrosad.ru/Electronics/SuperCon.htm)

Known in the art is an EDLC electrode made of a mixture of activated carbon particles, dispersed carbon (graphite or soot), porous elastic dielectric and a polymer binder (WO 94/01879). The activated carbon consists of a mixture if large (1-100 µm) and small (0.05-1 µm) particles.

The small particles take up some 10-60 percent by mass; the porous elastic dielectric represents particles of porous plastic 1-50 µm in size or fibers of porous dielectric materials measuring 0.3-50 µm in diameter and 0.1-5 mm long; the polymer binder is mostly represented by polyvinyl alcohol, polysaccharides, India rubber (caoutchouk), fluorine plastics.

However, a capacitor formed up of such electrodes has a low capacity, a fairly high resistance because of the use of the porous elastic dielectric, and a comparatively low mechanical strength. These disadvantages have been to a certain extent eliminated in the electrode designed to the RF patent No. 2172037, made of a adsorbing material like, say, activated carbon bonded by thermoplastic polymer particles uniformly distributed between the particles of activated carbon and having an average size of 0.08-0.9 of the average size of the activated carbon particles.

The electrode designed to the above patent may be also made from activated carbon and graphite powder or soot bonded together by polymer particles; in this case, to attain the most uniform distribution throughout the entire volume of the electrode, the average size of the graphite or soot particles must be 0.02-1.4 of the average size of activated carbon particles.

In one more embodiment of the electrode proposed in RF patent No. 2172037, which embodiment is the closest the present invention, the electrodes can additionally contain an activated carbon cloth attached to their surface, from one or both sides, by polymer particles, the average size of the cloth fiber being 0.2-0.5 of the average diameter of the adsorbing material particles. However, the strength of the said electrode is insufficient and, what is more, the fabrication technique is too complicated. The activated carbon cloth is placed into a mold, following which a homogenous mixture of a loose adsorbent and a polymer is loaded into the same mold, a carbon cloth is placed on top of all, if a bipolar electrode is to be made, and then the entire load is pressed and thermally treated. Then the mold is cooled and the finished electrode is taken out.

### Disclosure of the Invention

The object of the present invention is to provide an EDLC electrode combining good parameters of electric resistance and capacitance with increased mechanical strength.

Another object of the invention is to provide an electrode which is easy to manufacture.

These objects have been attained by the present invention the subject of which is an EDLC electrode comprising:
a flat substrate and an activated carbon cloth attached to the said substrate, the substrate being made of a thermally expanded graphite (TEG) impregnated with a high-polymer carbon or, more specifically, ceresine.

The above cloth is attached to the substrate with the aid of an adhesive which is resistant to electrolyte used in the capacitor.

The activated carbon cloth may be attached to the substrate from one or both sides. In the latter case the electrode will be bipolar and occupy an in-between (between the electrodes) position, while in the former case the electrode will be unipolar and so occupy the position at the end of the electrode assembly.

The main distinguishing feature of the present invention is the electrode using a substrate made of TEG that is also called "flexible graphite". The invention may use TEG of different trademarks, e.g., Grafoil® of UCAR Carbon Co. Inc, GRAPH-LOCK® of Garlock, and Grafleks 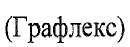 of the Russian company Unikhimtek 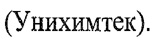

TEG is an elastic, compressible, resilient, chemically inert, fireproof and heat-resistant material. Its most valuable quality lies in the fact that its properties practically do not depend on temperature. TEG has anisotropic electric and thermal conductivity. It is extensively used in chemical, petrochemical and petroleum-refining industries, in automotive industry and as a noise-insulating material. Besides, TEG found commercial application in electronics as a screening material and for removal of heat.

Such properties of TEG as resilience and compressibility enable it to be produced in the form of sheets and be used as a structural material, which is the case in the present invention, wherein it is used as a substrate for the electrode.

### Embodiments of the Invention

### Embodiment 1. Fabrication of unipolar (end) electrode

A substrate of Grafleks TEG is soaked in ceresine at 110 - 140°C in a vacuum cabinet. Set the vacuum level to 0.5 - 0.8 kg/cm². Then the activated carbon cloth (ACC), type 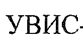 -AK-T-040 (TY 1916-002-18070047-2007), is treated, on its contour, with a water emulsion a latex, grade 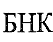 -302 (TY 38.103602-86), over the width of 2 - 5 mm to bond the cloth fibers together and soak in an electrolyte with a density of 1.25 - 1.28 g/cm². After the impregnation, the cloth is wrung out between the plates using a specific pressure of 7 - 8kg/cm².

The said ACC is attached to one side of the said graphite substrate impregnated with ceresine with the aid of acid-proof silicone adhesive. The adhesive is applied to the substrate in a thin 2-4 mm wide strip to the ACC contact area.

### Embodiment 2. Fabrication of bipolar (in-between) electrode

The same fabrication techniques is employed for embodiment 1 this time applying the ACC to both sides of the substrate.

### Embodiment 3

A capacitor (of 90 cells) is assembled from the electrodes fabricated as indicated in embodiments 1 and 2. The capacitor test has yielded the following results (Table 1)

**TABLE 1**

| No. | Parameter, unit of measurement | Value |
|---|---|---|
| 1 | Maximum operating voltage, V | 108 |
| 2 | Rated voltage, V | 90 |
| 3 | Permissible discharge voltage, V | 5 - 10 |
| 4 | Discharge current, A | 5 |
| 5 | Energy capacity, W/h | 6.27 |
| 6 | Stored energy, kJ | 22.6 |
| 7 | Electric capacitance, F | 5.5 |
| 8 | Specific capacitance, W*h/kg | 0.92 |
| 9 | Internal electrical resistance, megohm | 65 |
| 10 | Charging time, s | 116 |
| 11 | Mass, kg | 6.8 |
| 12 | Overall dimensions (less leads), mm | 160 x 120 x 233 |

## Claims

1. An electrode for the electric double-layer capacitor, said electrode comprising a flat substrate and an electrode material attached thereto, the substrate being made of thermally expanded graphite impregnated with a high-molecular carbon, while the electrode material represents an activated carbon cloth.

2. An electrode according to Claim 1, wherein an activated carbon cloth attached to the substrate with the aid of an adhesive resistant to the electrolyte of the capacitor.

3. An electrode according to Claim 1 or Claim 2, wherein an activated carbon cloth is attached to both sides of the substrate.

4. An electrode according to Claim 1 or 2, wherein an activated carbon cloth is attached to one side of the substrate.

5. An electrode according to Claim 1 or Claim 2, wherein ceresine is used as a high-molecular carbon.
